# EUROPÄISCHE PATENTSCHRIFT

(11) **EP 4 026 752 B1**
(45) Veröffentlichungstag und Bekanntmachung des Hinweises auf die Patenterteilung: **10.07.2024**
(21) Anmeldenummer: 21210936.7
(22) Anmeldetag: 29.11.2021
(51) Int. Cl.: B62D 5/00

(54) **STEER-BY-WIRE-LENKSYSTEM FÜR EIN KRAFTFAHRZEUG MIT VEREINFACHTER STEUERUNGSARCHITEKTUR**
STEER-BY-WIRE STEERING SYSTEM FOR A MOTOR VEHICLE WITH A SIMPLIFIED CONTROL ARCHITECTURE
SYSTÈME DE DIRECTION À COMMANDE PAR CÂBLE POUR UN VÉHICULE AUTOMOBILE À ARCHITECTURE DE COMMANDE SIMPLIFIÉE

(30) Priorität: 07.01.2021 DE 102021200092
(43) Veröffentlichungstag der Anmeldung: 13.07.2022
(73) Patentinhaber: VOLKSWAGEN AG, 38440 Wolfsburg (DE)
(72) Erfinder: Dreyer, Dirk, 31655 Stadthagen (DE); Nippold, Christoph, 38110 Braunschweig (DE)

(56) Entgegenhaltungen:
- DE-A1- 102010 052 441
- DE-A1- 102019 117 222
- DE-A1- 102019 200 911

## Beschreibung

Die Erfindung betrifft ein Steer-by-Wire-Lenksystem für ein Kraftfahrzeug sowie ein Verfahren zum Betreiben eines solchen Lenksystems. Bei dem Kraftfahrzeug kann es sich insbesondere um einen Personenkraftwagen oder einen Lastkraftwagen handeln.

Bei Steer-by-Wire-Lenkungen ist eine vom Fahrer betätigte Lenkhandhabe (insbesondere ein Lenkrad) mechanisch nicht mit einem Lenkgetriebe gekoppelt. Stattdessen werden Betätigungen der Lenkhandhabe sensorisch erfasst und wird daraufhin ein mit dem Lenkgetriebe gekoppelter Aktor (in der Regel ein auf eine Zahnstange einwirkender Elektromotor) nach Maßgabe dieser Betätigungen angesteuert. Um dem Fahrer dennoch eine haptische Rückmeldung über vorgenommene Fahrzeuglenkungen zu geben, ist die Lenkhandhabe mechanisch mit einem Reaktionskraftaktor verbunden. Der Reaktionskraftaktor ist dazu eingerichtet, nach Maßgabe einer aktuell durchgeführten Lenkung Gegenmomente zu erzeugen, die an der Lenkhandhabe entgegen der Fahrerbetätigung wirken. Auf diese Weise kann dem Fahrer ein natürliches Lenkgefühl vermittelt werden und insbesondere ein angemessener Lenkwiderstand. Letzterer würde aufgrund der fehlenden mechanischen Kopplung zum Lenkgetriebe ohne den Reaktionskraftaktor erheblich geringer ausfallen.

Um mit dem Reaktionskraftaktor angemessene Gegenmomente (oder auch Reaktionsmomente) einstellen zu können, wird die Rotorlage (oder auch Rotorposition) mittels eines Rotorlagensensors erfasst. Da der Reaktionskraftaktor das Lenkgefühl maßgeblich prägt und ein Ausfall des Reaktionskraftaktors zu sicherheitsrelevanten Irritationen des Fahrers führen kann, werden bei derzeitigen Steer-by-Wire-Lenksystemen derzeit zahlreiche für das Erzeugen geeigneter Reaktionskräfte bzw. Reaktionsmomente wesentliche Komponenten redundant verbaut. Dies betrifft insbesondere Rotorlagesensoren, die teils auch mit jeweils eigens zugeordneten Steuereinrichtungen verbunden sind. Die daraus resultierende redundant ausgelegte Steuerungsarchitektur ist mit entsprechend hohen Kosten verbunden.

Hintergrund zu Steer-by-Wire-Lenksystemen findet sich in der DE 10 2017 217 581 A1. Dort ist auch eine redundant ausgelegte Steuerungsarchitektur eines auf die Zahnstange einwirkenden Radlenkaktors gezeigt. Allgemeiner technologischer Hintergrund zu Winkelmessungen bei generisch andersartig ausgebildeten elektromechanischen Lenkungen findet sich in der DE 10 2014 105 682 A1 und US 10,647,353 B2.

Aus der DE 10 2019 117 222 A1 ist ein Steer-by-Wire-Lenksystem bekannt, mit einem mit einer Lenkhandhabe mechanisch verbundenen Reaktionskraftaktor, einem Rotorlagesensor zum Erfassen einer Rotorlage des Reaktionskraftaktors, einem Lenkhandhabewinkelsensor und wenigstens einer ersten Steuereinrichtung zum Ansteuern des Reaktionskraftaktors.

Aus der DE 10 2010 052 441 A1 ist ein Lenksystem eines Kraftfahrzeugs mit einem Elektromotor bekannt, mit einem Rotorlagesensor zum Erfassen einer Rotorlage des Elektromotors, mit einem Lenkhandhabewinkelsensor, mit wenigstens einer ersten Steuereinrichtung zum Ansteuern des Elektromotors, wobei die erste Steuereinrichtung dazu eingerichtet ist, bei einer Fehlfunktion des Rotorlagesensors eine Rotorlageinformation auf Basis eines Messwertes des Lenkhandhabewinkelsensors und einem Drehmomentsignal zu ermitteln.

Aus der DE 10 2019 200 911 A1 ist ein Eingabemodul für ein Steer-by-Wire-System mit einem Bedienelement und einem mit dem Bedienelement gekoppelten Aktuator bekannt, wobei der Aktuator ein Antriebselement zur Bereitstellung einer Haptikfunktion zur bedarfsweisen Übertragung einer am Bedienelement spürbaren Kraft oder eines am Bedienelement spürbaren Momentes aufweist, wobei eine Bedienelement-Verstellfunktion zum Verstellen der Position des Bedienelements vorgesehen ist, wobei der Aktuator derart ausgebildet ist, dass das Antriebselement des Aktuators auch für die Realisierung der Verstellfunktion zum Verstellen des Bedienelements nutzbar ist.

Eine Aufgabe der vorliegenden Erfindung ist es, die Komplexität und die Kosten von Steer-by-Wire-Lenksystemen zu verringern.

Diese Aufgabe wird durch eine Vorrichtung mit den Merkmalen des beigefügten Anspruchs 1 sowie ein Verfahren gemäß dem nebengeordneten Anspruch gelöst. Vorteilhafte Weiterbildungen sind in den abhängigen Ansprüchen angegeben.

Allgemein sieht die Erfindung vor, die bisher mehrfach redundante Auslegung von Steer-by-Wire-Lenksystemen zu vereinfachen und dadurch die Komplexität und die Kosten zu verringern. Vorzugsweise ist dabei vorgesehen, die Anzahl von Rotorlagesensoren zu begrenzen und insbesondere auf eins zu beschränken. Eine redundante Rotorlageinformation wird statt über einen zusätzlichen Rotorlagensensor von einem Lenkhandhabewinkelsensor erhalten.

Auch kann mit der hierin vorgestellten Lösung vorteilhafterweise die Anzahl an Steuereinrichtungen, insbesondere in Form von Mikrocontrollern, reduziert werden.

Insbesondere vorgeschlagen wird ein Steer-by-Wire-Lenksystem für ein Kraftfahrzeug, mit:
- einem Reaktionskraftaktor (oder auch Reaktionsmomentenaktor), der mit einer Lenkhandhabe (insbesondere einem Lenkrad) mechanisch verbunden ist;
- einem Rotorlagesensor (oder mit anderen Worten Rotorpositionssensor) zum Erfassen einer Rotorlage (oder mit anderen Worten Rotorposition) des Reaktionskraftaktors;
- einem Lenkhandhabewinkelsensor (im Folgenden auch verkürzt: Lenkwinkelsensor);
- wenigstens einer ersten Steuereinrichtung zum Ansteuern des Reaktionskraftaktors, insbesondere auf Basis einer Rotorlageinformation (oder mit anderen Worten Rotorpositionsinformation);
wobei die erste Steuereinrichtung dazu eingerichtet ist, bei einer Fehlfunktion des Rotorlagesensors eine Rotorlageinformation auf Basis eines Messwerts des Lenkhandhabewinkelsensors zu ermitteln.

Allgemein kann also spätestens bei einer Fehlfunktion des Rotorlagesensors auf den Messwert des Lenkhandhabewinkelsensors zurückgegriffen werden, um eine Rotorlageinformation zu bestimmen. Hierbei kann auf einen vorbekannten Zusammenhang zwischen Lenkwinkelwerten und Rotorlagewerten zurückgegriffen werden. Ein solcher Zusammenhang kann sich z.B. aus einem mechanischen Übersetzungsverhältnis zwischen der Lenkhandhabe und dem Reaktionskraftaktor ergeben. Letzteres liegt insbesondere dann vor, wenn, wie allgemein bevorzugt, der Reaktionskraftaktor und insbesondere dessen Rotor mechanisch mit der Lenkhandhabe gekoppelt ist.

Der Reaktionskraftaktor kann allgemein ein Elektromotor sein. Die Rotorlageinformation, die z.B. eine Rotorlageposition oder allgemein ein Rotorwinkel sein kann, kann für eine Momentenregelung zum Erzeugen gewünschter Reaktionskräfte und insbesondere Reaktionsmomente mit dem Reaktionskraftaktor verwendet werden. Die Ansteuerung des Reaktionskraftaktors kann eine solche Regelung zum Gegenstand haben oder, mit anderen Worten, im Kontext oder als Bestandteil einer solchen Regelung erfolgen. Es versteht sich, dass mit dem Reaktionskraftaktor an der Lenkhandhabe wirksame Momente erzeugbar sind. In Bezug auf diesen Aktor werden hierin die Begriffe Kraft und Moment daher teils austauschbar verwendet.

Die erste Steuereinrichtung kann ein Mikrocontroller sein und/oder wenigstens eine Prozessoreinrichtung umfassen und/oder wenigstens eine Speichereinrichtung aufweisen. Auf der Speichereinrichtung können Programmanweisungen hinterlegt sein, die die Prozessoreinrichtung dazu veranlassen, jegliche hierin geschilderten Funktionen der Steuereinrichtung bereitzustellen oder auszuführen.

Die Steuereinrichtung kann dazu eingerichtet sein, Messwerte des Lenkhandhabewinkelsensors zu erhalten, beispielsweise über eine Signalverbindung zu dem Lenkhandhabewinkelsensor oder zu einer zweiten Steuereinrichtung der nachstehend erläuterten Art, welche Messwerte dieses Sensors erhält und/oder aufbereitet.

Zum Ansteuern des Reaktionskraftaktors kann die erste Steuereinrichtung bevorzugt Steuersignale generieren und beispielsweise an eine Leistungselektronik des Reaktionskraftaktors ausgeben. Allgemein kann die Steuereinrichtung dazu eingerichtet sein, eine Leistungsregelung des Reaktionskraftaktors durchzuführen.

Weiter sind der Reaktionskraftaktor und der Rotorlagesensor (bevorzugt zusätzlich auch die erste Steuereinrichtung) an einen ersten Stromkreis angeschlossen und/oder an eine erste Stromversorgung (oder auch Spannungsquelle). Der Lenkhandhabewinkelsensor (und bevorzugt auch eine hiermit verbundene optionale zweite Steuereinrichtung) ist hingegen bevorzugt an einen zweiten Stromkreis und/oder an eine zweite Stromversorgung (oder auch Spannungsquelle) angeschlossen. Anders ausgedrückt werden also der Reaktionskraftaktor und Rotorlagesensor und der Lenkhandhabewinkelsensor von unterschiedlichen Stromkreisen und/oder Spannungsquellen versorgt. Dies erhöht die Ausfallsicherheit zumindest in der Weise, dass bei Ausfall eines Stromkreises noch die mit dem entsprechenden anderen Stromkreis verbundenen Einheiten weiter betrieben werden können.

Dabei ist vorgesehen, dass der erste und zweite Stromkreis galvanisch voneinander getrennt sind. Dies betrifft bevorzugt auch die jeweils hiervon umfassten Komponenten. Zusätzlich ist vorgesehen, dass die erste Steuereinrichtung mit dem Lenkhandhabewinkelsensor oder einer mit dem Lenkhandhabewinkelsensor verbundenen zweiten Steuereinrichtung über einen Signalkoppler signalübertragend verbunden ist. Anders ausgedrückt ist die erste Steuereinrichtung bevorzugt dazu eingerichtet, über einen Signalkoppler Messwerte des Lenkhandhabewinkelsensors zu erhalten. Hierbei kann es sich auch um Messwerte handeln, die von einer zweiten Steuereinrichtung aufbereitet werden.

Bei dem Signalkoppler kann es sich allgemein um eine Einheit handeln, die eine Signalübertragung zwischen einer sendenden und einer empfangenden Einheit unter Aufrechterhaltung einer galvanischen Trennung ermöglicht. Anders ausgedrückt kann es sich also um einen galvanisch trennenden Signalkoppler handeln. Insbesondere kann der Signalkoppler ein Optokoppler sein oder einen solchen umfassen. Alternativ kann er ein digitaler Isolator sein oder einen solchen umfassen. Durch die galvanische Trennung und insbesondere einen entsprechend ausgebildeten Signalkoppler wird die Ausfallsicherheit verbessert, insbesondere in der Weise, dass die Wahrscheinlichkeit eines Ausfalls des gesamten Lenksystems bei Auftreten eines lediglich lokalen oder einzelnen Fehlers begrenzt wird.

Bevorzugt weist das Steer-by-Wire-Lenksystem nur einen einzigen Rotorlagesensor zum Erfassen der Rotorlage des Reaktionskraftaktors auf. Anders ausgedrückt ist der Rotorlagesensor des Reaktionskraftaktors vorzugsweise nicht redundant ausgelegt und/oder redundant vorhanden. Dies spart Kosten und wird vorliegend dadurch ermöglicht, dass bei Fehlfunktionen des bevorzugt einzigen Rotorlagesensors eine alternative Möglichkeit bereitsteht, um eine gewünschte Rotorlageinformation des Reaktionskraftaktors zu ermitteln.

Zusätzlich oder alternativ kann der Rotorlagesensor ein relativ messender Sensor sein. Hierunter kann verstanden werden, dass der Rotorlagesensor vorzugsweise nicht dazu eingerichtet ist, über ein vollständiges mögliches Bewegungsausmaß absolute Rotorlagen zu bestimmen. Dies gilt bevorzugt auch für den Fall von Mehrfachumdrehungen des Rotors, also beispielsweise einem Bewegungsausmaß von mehr als 360°. Kann der Rotorlagesensor nur für einen Teil dieses Bewegungsausmaßes (beispielsweise von 0° bis 360°) absolut messen, kann er im Sinne dieser Offenbarung dennoch als ein relativ messender Sensor bezeichnet werden. Ebenso vorgesehen sein können aber Rotorlagesensoren, die auch nicht für einen lediglich begrenzten Anteil des Bewegungsausmaßes absolut messen können, also die ausschließlich relative Messwerte liefern, beispielsweise durch Aufsummieren von Indexwerten. Durch Verwenden eines entsprechend relativ messenden Rotorlagesensors können die Kosten zusätzlich reduziert werden.

Bevorzugt ist in diesem Zusammenhang ferner vorgesehen, dass absolute Rotorlagewerte auf Basis der relativen Messwerte des Rotorlagesensors dennoch bestimmbar sind. Hierfür ist die erste Steuereinrichtung vorzugsweise dazu eingerichtet, absolute Rotorlagewerte auf Basis von wenigstens einem Messwert des Lenkhandhabewinkelsensors und wenigstens einem relativen Messwert des Rotorlagesensors zu bestimmen. Beispielsweise kann bei einem Aufstarten des Lenksystems und/oder allgemein bei einer Initialisierung des Lenksystems oder zumindest von dem Rotorlagesensor ein dann vorliegender bevorzugt absoluter Messwert des Lenkhandhabewinkelsensors erhalten werden. In Kenntnis des bereits erläuterten Übersetzungsverhältnisses oder allgemein des Zusammenhangs zwischen Werten des Lenkhandhabewinkels und der Rotorlage kann dann eine aktuell vorliegende Rotorlage auf Basis dieses erhaltenen Lenkhandhabewinkels bestimmt werden. In der Folge erhaltene relative Messwerte des Rotorlagesensors können in Kenntnis des initial vorliegenden absoluten Rotorlagewerts in entsprechend absolute Rotorlagewerte umgerechnet werden. Anders ausgedrückt kann also der zunächst anhand des Lenkhandhabewinkels bestimmte absolute Rotorlagewert als eine Referenz dienen, um zukünftige relative Messwerte in absolute Messwerte umzurechnen. Auf diese Weise wird eine zuverlässige Messwertgenerierung auch bei Verwenden eines kostengünstigen relativ messenden Rotorlagesensors ermöglicht.

Entsprechend sieht eine bevorzugte Variante vor, dass der Lenkhandhabewinkelsensor ein absolut messender Sensor ist.

Eine Weiterbildung sieht vor, dass der Lenkhandhabewinkelsensor mit einer zweiten Steuereinrichtung verbunden ist. Diese kann insbesondere Messwerte des Lenkhandhabewinkelsensors aufbereiten und/oder Signale zur Signalübertragung an die erste Steuereinrichtung erzeugen, wobei die Signale die entsprechenden Messwerte enthalten. Vorzugsweise sind die erste Steuereinrichtung und die zweite Steuereinrichtung mit unterschiedlichen Fahrzeugkommunikationsbussen verbunden. Allgemein können die erste Steuereinrichtung und die zweite Steuereinrichtung über den bereits geschilderten Signalkoppler miteinander verbunden sein. Zusätzlich können sie aber auch mit Fahrzeugkommunikationsbussen verbunden sein, insbesondere CAN-Bussen. Hierbei kann es sich um redundant ausgelegte Fahrzeugkommunikationsbusse handeln. Die erste Steuereinrichtung kann über einen ersten Fahrzeugkommunikationsbus (oder auch allgemein über einen anderweitigen Signalpfad) Lenkhandhabewinkelmesswerte an einen mit der Zahnstange gekoppelten Aktor (mit anderen Worten einen Radlenkaktor) übermitteln, damit die Fahrzeugräder nach Maßgabe der Lenkhandhabebetätigung ausgelenkt werden. Die zweite Steuereinrichtung kann über einen zweiten Fahrzeugkommunikationsbus optional Signale erhalten, um ein geeignetes Reaktionsmoment einzustellen, beispielsweise Signale betreffend eine geschätzte oder gemessene Zahnstangenkraft.

Dadurch, dass die erste und zweite Steuereinrichtung an unterschiedliche Fahrzeugkommunikationsbusse angebunden sind, wird wiederum die Verfügbarkeit des Lenksystems verbessert, insbesondere im Vergleich zu dem Fall, dass lediglich ein Fahrzeugkommunikationsbus vorhanden ist, der bei einem Ausfall einer der Steuereinrichtungen des Lenksystems eine Kommunikation mit anderweitigen Einheiten ermöglichen würde.

Gemäß einem weiteren Aspekt weist das Lenksystem auch einen Längsverstellaktor für die Lenkhandhabe auf. Hierdurch kann in an sich bekannter Weise eine Längsposition (oder aus Sicht des Fahrers eine Tiefenposition) der Lenkhandhabe verstellt werden. Beispielsweise kann diese mittels des Aktors in unterschiedliche Abstände von einer Instrumententafel und/oder dem Fahrer bewegt werden. Die Längsverstellachse kann parallel zu oder entlang einer mit der Lenkhandhabe gekoppelten und gemeinsam mit dieser verdrehbaren Lenkwelle verlaufen. Vorzugsweise ist vorgesehen, dass der Längsverstellaktor ebenfalls von der ersten Steuereinrichtung ansteuerbar ist. Beispielsweise kann die erste Steuereinrichtung von einem vom Fahrer betätigbaren Bedienelement Signale erhalten und nach Maßgabe dieser Betätigungssignale den Längsverstellaktor ansteuern, insbesondere eine Leistungselektronik hiervon ansteuern.

Bei vorstehender Ausführungsform werden also die Ansteuerungen des Längsverstellalktors und auch des Reaktionskraftaktors in eine einzelne Steuereinrichtung integriert. Dies mindert die Kosten und reduziert die Komplexität im Vergleich zum gängigen Fall, wonach jeder dieser Aktoren über eine eigens zugeordnete Steuereinrichtung verfügt.

Die Erfindung betrifft auch ein Verfahren zum Betreiben eines Steer-by-Wire-Lenksystems für ein Kraftfahrzeug, wobei das Steer-by-Wire-Lenksystem aufweist:
- einen mit einer Lenkhandhabe mechanisch verbundenen Reaktionskraftaktor;
- einen Rotorlagesensor zum Erfassen einer Rotorlage des Reaktionskraftaktors;
- einen Lenkhandhabewinkelsensor; wobei das Verfahren bei einer Fehlfunktion des Rotorlagesensors aufweist
- Ermitteln einer Rotorlageinformation auf Basis eines Messwerts des Lenkhandhabewinkelsensors;
und wobei der Reaktionskraftaktor und der Rotorlagensensor an einen ersten Stromkreis angeschlossen sind und der Lenkhandhabewinkelsensor an einen zweiten Stromkreis angeschlossen ist, wobei der erste und zweite Stromkreis galvanisch voneinander getrennt sind und die Steuereinrichtung über einen Signalkoppler Messwerte des Lenkhandhabewinkelsensors erhält.

Das Verfahren kann sämtliche weiteren Merkmale, Weiterbildungen und Varianten aufweisen, um sämtliche im Kontext des Lenksystems geschilderten Funktionen, Maßnahmen und Betriebszustände bereitzustellen. Insbesondere können sämtliche in Bezug auf das Lenksystem erläuterte Varianten und Weiterbildungen auch auf sämtliche gleichlautende Verfahrensmerkmale zutreffen bzw. bei diesen vorgesehen sein. Allgemein kann das Verfahren von der ersten Steuereinrichtung der vorstehend erläuterten Art ausgeführt werden. Bevorzugt weist es zusätzlich die erläuternden Initialisierungsmaßnahmen bei insbesondere einem Aufstarten auf, wonach absolute Lenkwinkelmesswerte als eine Referenz für einen relativ messenden Rotorlagesensor dienen. Allgemein kann das Verfahren auch einen gesonderten Schritt des Ermittelns einer Fehlfunktion des Rotorlagesensors aufweisen, beispielsweise wenn dessen Messwerte wegfallen, unplausibel sind und/oder unerwartete Sprünge aufweisen.

Ausführungsbeispiele der Erfindung werden im Folgenden anhand der beigefügten Figur erläutert:

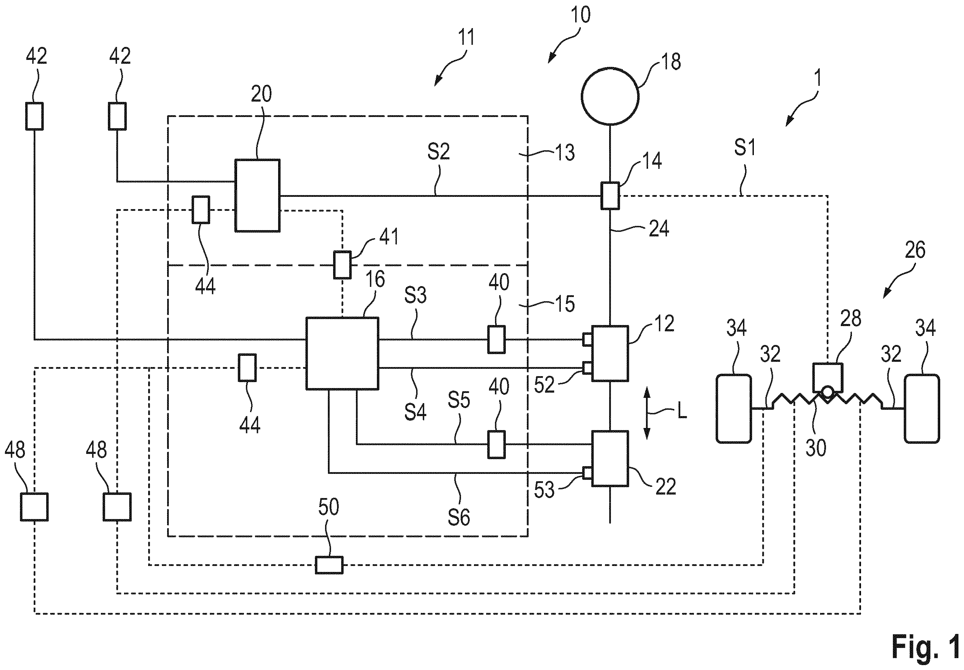

- Fig. 1: zeigt eine schematisch vereinfachte Darstellung eines Steer-by-Wire-Lenksystems gemäß einem Ausführungsbeispiel der Erfindung, das ein beispielhaftes erfindungsgemäßes Verfahren ausführt.

In Fig. 1 ist ein Steer-by-Wire-Lenksystem 10 eines lediglich in ausgewählten Teilen dargestellten Kraftfahrzeugs 1 gezeigt. Das Steer-by-Wire-Lenksystem 10 umfasst gemäß diesem erfindungsgemäßen Ausführungsbeispiel einen Reaktionskraftaktor 12, einen Lenkhandhabewinkelsensor 14 und eine erste Steuereinrichtung 16. Es kann aber auch sämtliche nachstehend erläuterten weiteren Komponenten umfassen, insbesondere die Lenkhandhabe 18 und/oder eine zweite Steuereinrichtung 20 und/oder einen optionalen Längsverstellaktor 22.

Insgesamt entspricht das Funktionsprinzip des Steer-by-Wire-Lenksystems 10 herkömmlichen Varianten. So ist eine Lenkhandhabe 18 mit einer Lenkwelle 24 verbunden, wobei die Lenkwelle 24 gemeinsam mit der Lenkhandhalbe 18 verdrehbar ist. Allerdings sind weder die Lenkhandhabe 18 noch die Lenkwelle 24 mit einem Lenkgetriebe 26 mechanisch verbunden. Beispielhaft weist das Lenkgetriebe 26 einen Radlenkaktor 28 auf, der in eine Zahnstange 30 eingreift. Letztere ist über ein Lenkgestänge 32 mit den Fahrzeugrädern 34 einer Vorderachse des Kraftfahrzeugs 1 gekoppelt.

Eine Betätigung der Lenkhandhabe 18 wird mittels eines Lenkhandhabewinkelsensors (im Folgenden auch lediglich Lenkwinkelsensor) 14 erfasst. Diese Information wird, wie durch eine Signalverbindung S1 angedeutet, verwendet, um den Radlenkaktuator 28 anzusteuern. Dieser stellt dann einen Lenkwinkel des Kraftfahrzeugs 1 durch eine entsprechende Auslenkung der Räder 34 ein, indem er die Zahnstange 30 in bekannter Weise linear verlagert.

Um dem Fahrer dennoch ein definiertes Lenkgefühl zu vermitteln, ist der Reaktionskraftaktor 12 mit der Lenkwelle 24 mechanisch gekoppelt. Genauer gesagt ist der Reaktionskraftaktor 12 dazu eingerichtet, definierte Momente auf die Eingangswelle 24 und somit auf die Lenkhandhabe 18 aufzubringen, die bevorzugt entgegen einer vom Fahrer gewählten Betätigung wirken. Vom Fahrer werden diese Momente entsprechend als Reaktionskräfte oder auch Gegenkräfte wahrgenommen.

Rein optional ist auch ein Längsverstellaktor 22 gezeigt. Mittels diesem ist die Lenkhandhabe 18 gemäß dem gezeigten Pfeil L längsverstellbar. Die Achse der Längsverstellung verläuft parallel oder auch kongruent zu einer Längsachse der Lenkwelle 24.

Das Steer-by-Wire-Lenksystem 10 umfasst eine Steuerungsarchitektur 11. Diese kann von einem Steuergerät umfasst oder als ein solches ausgebildet sein. Alternativ oder zusätzlich kann sie auf wenigstens einer Leiterplatte ausgebildet oder bereitgestellt sein. Die Steuerungsarchitektur 11 umfasst zwei galvanisch voneinander getrennte Teile 13, 15. Der erste Teil 13 weist die zweite Steuereinrichtung 20 auf, die mit dem Lenkwinkelsensor 14 über eine Signalverbindung S2 kommuniziert. Der zweite Teil 15 weist die erste Steuereinrichtung 16 auf, die insbesondere über eine Signalverbindung S3 mit dem Reaktionskraftaktor 12 und genauer gesagt mit einer Leistungselektronik 40 hiervon kommuniziert. Die Leistungselektronik 40 kann auch unabhängig von der Steuerungsarchitektur 11 ausgebildet sein, also beispielsweise unmittelbar an dem Reaktionskraftaktor 12 positioniert sein. Mit dem Rotorlagesensor 52 ist die erste Steuereinrichtung 16 über die Signalleitung S4 verbunden.

Die erste und zweite Steuereinrichtung 16, 20 sind trotz der galvanischen Trennung über einen Signalkoppler 41 signalübertragend miteinander verbunden. Bei dem Signalkoppler 41 handelt es sich bevorzugt um einen Optokoppler oder um einen digitalen Isolator.

Gezeigt ist auch, dass die erste und zweite Steuereinrichtung 16, 20 an unterschiedliche Stromkreise und insbesondere Spannungsquellen 42 angeschlossen sind. Nicht gesondert gezeigt ist, dass die Spannungsquellen 42 auch optional weitere und bevorzugt sämtliche weiteren Komponenten der Steuerungsarchitektur 11 mit Strom versorgen können. Zusätzlich oder alternativ können sie auch die hiervon angesteuerten Einheiten versorgen, beispielsweise den Reaktionskraftaktor 12, Längsverstellaktor 22 oder aber den Lenkwinkelsensor 14.

Weiter gezeigt ist auch, dass jeweils über eine zwischengeschaltete Übertragungseinrichtung 44 die Steuereinrichtungen 16, 20 mit Kommunikationsbussen 48 verbunden sind. Lediglich schematisch ist eine Art zentrale Steuereinrichtung der Kommunikationsbusse 48 angedeutet sowie ein gestrichelt dargestellter Verlauf von deren Kommunikationspfaden. Allgemein weist das Kraftfahrzeug 1 redundante Kommunikationsbusse 48 auf und die Steuereinrichtungen 16, 20 sind jeweils mit voneinander verschiedenen Kommunikationsbussen 48 verbunden (also die erste Steuereinrichtung 16 mit einem ersten und die zweite Steuereinrichtung 20 mit einem zweiten Kommunikationsbus 48). Anhand der gestrichelt dargestellten Signalverläufe ist angedeutet, dass über die Kommunikationsbusse 48 die Steuereinrichtungen 16, 20 auch jeweils mit dem Lenkgetriebe 26 verbunden sind. In diesem Kontext kann insbesondere vorgesehen sein, dass der Signalpfad S1 zum Übertragen des Lenkwinkels an dem Radlenkaktor 28 in den entsprechenden mit der zweiten Steuereinrichtung 20 verbundenen Kommunikationsbus 48 integriert ist.

Als ein bevorzugtes weiteres Merkmal ist ein weiterer Kommunikationsbus 50 gezeigt, über den die erste Steuereinrichtung 16 bevorzugt direkt mit dem Lenkgetriebe 26 verbunden ist. Beispielsweise kann die Steuereinrichtung 16 hierüber unmittelbar einen aktuell eingestellten Radlenkwinkel und/oder eine Zahnstangenkraft erhalten und darauf basierend den Reaktionskraftaktor 12 ansteuern. Dieser zusätzliche Kommunikationsbus 50 kann auch als ein als eine Privat-Kommunikationsbus oder Privat-CAN-Verbindung bezeichnet werden.

Die erste Steuereinrichtung 16 ist ferner mit einem Rotorlagesensor 52 des Reaktionskraftaktors 12 verbunden. Dieser misst eine Rotorlage des als Elektromotor ausgebildeten Reaktionskraftaktors 12 und insbesondere dessen eingenommene Winkelposition. Der Rotor ist dabei drehfest mit der Lenkwelle 24 gekoppelt. Letzteres bedeutet, dass von mit dem Lenkwinkelsensor 14 gemessenen Lenkwinkeln auch auf eine Rotorlage geschlossen werden kann. Vorliegend macht sich die gezeigte Lösung dies dahingehend zunutze, dass spätestens dann, wenn der Rotorlagesensor 52 eine Fehlfunktion aufweist (was die erste Steuereinrichtung 16 z.B. an unplausiblen oder nicht vorhandenen Messwerten erkennen kann) die erste Steuereinrichtung 16 über den Signalkoppler 41 Lenkwinkelmesswerte von der zweiten Steuereinrichtung 20 erhält. Darauf basierend kann sie eine Rotorlageinformation bestimmen und genauer gesagt die Rotorlage berechnen, anstatt auf einen Messwert des Rotorlagesensors 52 zurückzugreifen. Wie einleitend erläutert, ermöglicht dies einen Verzicht auf einen zusätzlichen redundanten Rotorlagesensor 52, was die Teileanzahl und Kosten verringert.

Als ein weiteres vorteilhaftes Merkmal sieht die gezeigte Lösung vor, dass der Rotorlagesensor 52 ein relativ messender Sensor ist. Der Lenkwinkelsensor 14 ist hingegen bevorzugt ein absolut messender Sensor. Wenn das Lenksystem 10 und insbesondere die Steuerungsarchitektur 11 gestartet wird, erhält die erste Steuereinrichtung 16 den aktuellen absoluten Lenkwinkelwert von der zweiten Steuereinrichtung 20. Dieser dient als eine Referenz, um einen aktuellen relativen Rotorlagewert des Rotorlagesensors 52 mit einem entsprechenden absoluten Rotorlagewert gleichzusetzen. Genauer gesagt kann aufgrund des bekannten Zusammenhangs zwischen Lenkwinkel und Rotorlage anhand des gemessenen Lenkwinkels eine aktuelle absolute Rotorlage bestimmt werden und der relative Lagemesswert des Rotorlagesensors 52 kann diesem absoluten Rotorlagewert gleichgesetzt werden. In der Folge gemessene relative Rotorlagewerte können in Kenntnis dieses initial bestimmten absoluten Rotorlagewerts in einen entsprechenden absoluten Rotorlagewert umgerechnet werden. Beispielsweise kann eine Differenz eines aktuell gemessenen (relativen) Rotorlagewerts von dem initialen (absoluten) Rotorlagewert ermittelt werden und kann als aktueller absoluter Rotorlagewert ein Wert bestimmt werden, der eine analoge Differenz zum initial bestimmten absoluten Rotorlagewert aufweist.

Wie erwähnt, ist die erste Steuereinrichtung 16 optional auch dazu eingerichtet, den Längsverstellaktor 22 anzusteuern. Hierzu ist sie wiederum mit einer Leistungselektronik 40 dieses Aktors 22 verbunden (Signalverbindung S5). Nach Maßgabe von Benutzereingaben über nicht gesondert dargestellte Bedienelemente, die die erste Steuereinrichtung 16 beispielsweise über den Kommunikationsbus 48 erhalten kann, kann die erste Steuereinrichtung 16 die Leistungselektronik 40 dieses Aktors 22 ansteuern, um die gewünschte Längsverstellung der Lenkhandhabe 18 zu bewirken.

Als ein weiteres optionales Merkmal ist eine Signalverbindung S6 zwischen der ersten Steuereinrichtung 16 und einer sensorischen Einheit 53 des Längsverstellaktors 22 gezeigt. Diese sensorische Einheit 53 kann eine aktuelle Position und insbesondere Längsposition der Lenkhandhabe 18 und/oder Lenkwelle 24 ermitteln. Zusätzlich oder alternativ kann sie das Überschreiten oder Nichtüberschreiten wenigstens einer vorbestimmten Indexmarke oder, allgemeiner, einer definierten Längsverstellung oder definierten Längsachsenposition von Lenkhandhabe 18 und/oder Lenkwelle 24 ermitteln. Hierdurch kann beispielsweise überwacht werden, ob ein definiertes Ausmaß der Längsverstellung erreicht wurde, wonach die Lenkhandhabe 18 derart weit vom Fahrer entfernt und in die Nähe einer Instrumententafel ist, dass ein sicherer Betrieb des Kraftfahrzeugs 1 nicht mehr gewährleistet werden kann. Dies ist auch als das Erreichen eines sogenannten Verstaubereiches bekannt, der beispielsweise für Reinigungs- oder Reparaturarbeiten vorteilhaft sein kann. Allerdings kann es bei Erreichen des Verstaubereiches nicht mehr gewährleistet werden, dass in der Lenkhandhabe 18 integrierte Airbags eine ausreichend schützende Funktion entfalten. Wurde also mittels der sensorischen Einheit 53 das Einfahren in den Verstaubereich erkannt, kann die erste Steuereinrichtung 16 Maßnahmen z.B. ergreifen, um eine Fortbewegung des Kraftfahrzeugs 1 zu unterbinden.

Nicht gesondert dargestellt ist, dass zusätzlich oder alternativ zu dem Lenkwinkelsensor 14 auch ein Lenkmomentensensor bereitgestellt sein kann und/oder mit dem Lenkwinkelsensor 14 auch ein vom Fahrer an der Lenkhandhabe 18 aufgebrachtes Handmoment messbar ist. Eine solche Handmomenteninformation kann bevorzugt über einen weiteren Signalkoppler 41 von der zweiten Steuereinrichtung 20 an die erste Steuereinrichtung 16 übermittelt werden. Auch dies kann dazu verwendet werden, um darauf basierend geeignete Reaktionskräfte zu erzeugen.

### Bezugszeichenliste

- 1: Kraftfahrzeug
- 10: (Steer-by-Wire)-Lenksystem
- 11: Steuerungsarchitektur
- 12: Reaktionskraftaktor
- 13: erster Teil der Steuerungsarchitektur
- 14: Lenkwinkelsensor
- 15: zweiter Teil der Steuerungsarchitektur
- 16: erste Steuereinrichtung
- 18: Lenkhandhabe
- 20: zweite Steuereinrichtung
- 22: Längsverstellaktor
- 24: Lenkwelle
- 26: Lenkgetriebe
- 28: Radlenkaktor
- 30: Zahnstange
- 32: Lenkgestänge
- 34: Vorderrad
- 40: Leistungselektronik
- 41: Signalkoppler
- 42: Spannungsquelle
- 48: Fahrzeugkommunikationsbus
- 50: Privat-Kommunikationsbus
- 52: Rotorlagesensor
- 53: sensorische Einheit

## Patentansprüche

1. Steer-by-Wire-Lenksystem (10) für ein Kraftfahrzeug (1), mit:
- einem mit einer Lenkhandhabe (18) mechanisch verbundenen Reaktionskraftaktor (12);
- einem Rotorlagesensor (52) zum Erfassen einer Rotorlage des Reaktionskraftaktors (12);
- einem Lenkhandhabewinkelsensor (14);
- wenigstens einer ersten Steuereinrichtung (16) zum Ansteuern des Reaktionskraftaktors (12);
**dadurch gekennzeichnet, dass**
die erste Steuereinrichtung (16) dazu eingerichtet ist, bei einer Fehlfunktion des Rotorlagesensors (52) eine Rotorlageinformation auf Basis eines Messwerts des Lenkhandhabewinkelsensors (14) zu ermitteln, wobei der Reaktionskraftaktor (12) und der Rotorlagesensor (52) an einen ersten Stromkreis angeschlossen sind und der Lenkhandhabewinkelsensor (14) an einen zweiten Stromkreis, wobei der erste und zweite Stromkreis galvanisch voneinander getrennt sind und die erste Steuereinrichtung (16) über einen Signalkoppler (41) Messwerte des Lenkhandhabewinkelsensors (14) erhält.

2. Steer-by-Wire-Lenksystem (10) nach Anspruch 1,
**dadurch gekennzeichnet, dass** das Steer-by-Wire-Lenksystem (10) nur einen einzigen Rotorlagesensor (52) zum Erfassen der Rotorlage des Reaktionskraftaktors (12) aufweist.

3. Steer-by-Wire-Lenksystem (10) nach Anspruch 1 oder 2,
**dadurch gekennzeichnet, dass** der Rotorlagesensor (52) ein relativ messender Sensor ist.

4. Steer-by-Wire-Lenksystem (10) nach Anspruch 3,
**dadurch gekennzeichnet, dass** die erste Steuereinrichtung (16) dazu eingerichtet ist, absolute Rotorlagewerte auf Basis von wenigstens einem Messwert des Lenkhandhabewinkelsensors (14) und wenigstens einem relativen Messwert des Rotorlagensensors (52) zu bestimmen.

5. Steer-by-Wire-Lenksystem (10) nach einem der vorangehenden Ansprüche,
**dadurch gekennzeichnet, dass** der Lenkhandhabewinkelsensor (14) ein absolut messender Sensor ist.

6. Steer-by-Wire-Lenksystem (10) nach einem der vorangehenden Ansprüche **dadurch gekennzeichnet, dass** der Lenkhandhabewinkelsensor (14) mit einer zweiten Steuereinrichtung (20) verbunden ist, wobei die erste Steuereinrichtung (16) und die zweite Steuereinrichtung (20) mit unterschiedlichen Fahrzeugkommunikationsbussen (48) verbunden sind.

7. Steer-by-Wire-Lenksystem (10) nach einem der vorangehenden Ansprüche **gekennzeichnet durch** einen Längsverstellaktor (22) für die Lenkhandhabe (18), der von der ersten Steuereinrichtung (16) ansteuerbar ist.

8. Verfahren zum Betreiben eines Steer-by-Wire-Lenksystems (10) für ein Kraftfahrzeug (1) wobei das Steer-by-Wire-Lenksystem (10) aufweist:
- einen mit einer Lenkhandhabe (18) mechanisch verbundenen Reaktionskraftaktor (12);
- einen Rotorlagesensor (52) zum Erfassen einer Rotorlage des Reaktionskraftaktors (12);
- einen Lenkhandhabewinkelsensor (14);
und wobei das Verfahren bei einer Fehlfunktion des Rotorlagesensors (52) aufweist:
- Ermitteln einer Rotorlageinformation auf Basis eines Messwerts des Lenkhandhabewinkelsensors (14), wobei der Reaktionskraftaktor (12) und der Rotorlagensensor (52) an einen ersten Stromkreis angeschlossen sind und der Lenkhandhabewinkelsensor (14) an einen zweiten Stromkreis angeschlossen ist, wobei der erste und zweite Stromkreis galvanisch voneinander getrennt sind und die Steuereinrichtung (16) über einen Signalkoppler (41) Messwerte des Lenkhandhabewinkelsensors (14) erhält.

## Claims

1. Steer-by-wire steering system (10) for a motor vehicle (1), comprising:
- a reaction force actuator (12), which is mechanically connected to a steering handle (18);
- a rotor position sensor (52) for detecting a rotor position of the reaction force actuator (12);
- a steering handle angle sensor (14);
- at least one first control device (16) for actuating the reaction force actuator (12),
**characterized in that**
the first control device (16) is designed, in the event of a malfunction in the rotor position sensor (52), to ascertain an item of rotor position information on the basis of a measured value of the steering handle angle sensor (14), wherein the reaction force actuator (12) and the rotor position sensor (52) are connected to a first electrical circuit and the steering handle angle sensor (14) is connected to a second electrical circuit, wherein the first and the second electrical circuit are DC-isolated from each other and the first control device (16) receives measured values of the steering handle angle sensor (14) via a signal coupler (41).

2. Steer-by-wire steering system (10) according to Claim 1,
**characterized in that** the steer-by-wire steering system (10) has only one single rotor position sensor (52) for detecting the rotor position of the reaction force actuator (12).

3. Steer-by-wire steering system (10) according to Claim 1 or 2, **characterized in that** the rotor position sensor (52) is a relative-measurement sensor.

4. Steer-by-wire steering system (10) according to Claim 3,
**characterized in that** the first control device (16) is designed to determine absolute rotor position values on the basis of at least one measured value of the steering handle angle sensor (14) and at least one relative measured value of the rotor position sensor (52).

5. Steer-by-wire steering system (10) according to any of the preceding claims, **characterized in that** the steering handle angle sensor (14) is an absolute-measurement sensor.

6. Steer-by-wire steering system (10) according to any of the preceding claims, **characterized in that** the steering handle angle sensor (14) is connected to a second control device (20), wherein the first control device (16) and the second control device (20) are connected to different vehicle communication buses (48).

7. Steer-by-wire steering system (10) according to any of the preceding claims, **characterized by** a longitudinal adjustment actuator (22) for the steering handle (18), the longitudinal adjustment actuator being able to be actuated by the first control device (16).

8. Method for operating a steer-by-wire steering system (10) for a motor vehicle (1), wherein the steer-by-wire steering system (10) has:
- a reaction force actuator (12), which is mechanically connected to a steering handle (18);
- a rotor position sensor (52) for detecting a rotor position of the reaction force actuator (12);
- a steering handle angle sensor (14);
and wherein the method, in the event of a malfunction in the rotor position sensor (52), comprises:
- ascertaining an item of rotor position information on the basis of a measured value of the steering handle angle sensor (14), wherein the reaction force actuator (12) and the rotor position sensor (52) are connected to a first electrical circuit and the steering handle angle sensor (14) is connected to a second electrical circuit, wherein the first and the second electrical circuit are DC-isolated from each other and the control device (16) receives measured values of the steering handle angle sensor (14) via a signal coupler (41).

## Revendications

1. Système de direction par commande électrique (10) pour un véhicule automobile (1), comprenant :
- un actionneur à force de réaction (12) relié mécaniquement à une manette de direction (18) ;
- un capteur de position de rotor (52) destiné à détecter une position de rotor de l'actionneur à force de réaction (12) ;
- un capteur d'angle de manette de direction (14) ;
- au moins un premier dispositif de commande (16) servant à commander l'actionneur à force de réaction (12) ;
**caractérisé en ce que**
le premier dispositif de commande (16) est conçu pour, dans le cas d'un défaut de fonctionnement de l'actionneur à force de réaction (52), déterminer une information de position de rotor sur la base d'une valeur mesurée du capteur d'angle de manette de direction (14), l'actionneur à force de réaction (12) et le capteur de position de rotor (52) étant raccordés à un premier circuit électrique et le capteur d'angle de manette de direction (14) à un deuxième circuit électrique, les premier et deuxième circuits électriques étant séparés galvaniquement l'un de l'autre et le premier dispositif de commande (16) recevant des valeurs mesurées du capteur d'angle de manette de direction (14) par le biais d'un coupleur de signal (41).

2. Système de direction par commande électrique (10) selon la revendication 1, **caractérisé en ce que** le système de direction par commande électrique (10) ne possède qu'un seul capteur de position de rotor (52) pour détecter la position de rotor de l'actionneur à force de réaction (12).

3. Système de direction par commande électrique (10) selon la revendication 1 ou 2, **caractérisé en ce que** le capteur de position de rotor (52) est un capteur à mesure relative.

4. Système de direction par commande électrique (10) selon la revendication 3, **caractérisé en ce que** le premier dispositif de commande (16) est conçu pour déterminer des valeurs de position de rotor absolues sur la base d'au moins une valeur mesurée du capteur d'angle de manette de direction (14) et d'au moins une valeur mesurée relative du capteur de position de rotor (52).

5. Système de direction par commande électrique (10) selon l'une des revendications précédentes, **caractérisé en ce que** le capteur d'angle de manette de direction (14) est un capteur à mesure absolue.

6. Système de direction par commande électrique (10) selon l'une des revendications précédentes, **caractérisé en ce que** le capteur d'angle de manette de direction (14) est relié à un deuxième dispositif de commande (20), le premier dispositif de commande (16) et le deuxième dispositif de commande (20) étant reliés à des bus de communication de véhicule (48) différents.

7. Système de direction par commande électrique (10) selon l'une des revendications précédentes, **caractérisé par** un actionneur de positionnement longitudinal (22) pour la manette de direction (18), lequel peut être commandé par le premier dispositif de commande (16).

8. Procédé pour faire fonctionner un système de direction par commande électrique (10) pour un véhicule automobile (1), la direction par commande électrique (10) possédant :
- un actionneur à force de réaction (12) relié mécaniquement à une manette de direction (18) ;
- un capteur de position de rotor (52) destiné à détecter une position de rotor de l'actionneur à force de réaction (12) ;
- un capteur d'angle de manette de direction (14) ; et le procédé, dans le cas d'un défaut de fonctionnement du capteur de position de rotor (52), comprenant :
- détermination d'une information de position de rotor sur la base d'une valeur mesurée du capteur d'angle de manette de direction (14), l'actionneur à force de réaction (12) et le capteur de position de rotor (52) étant raccordés à un premier circuit électrique et le capteur d'angle de manette de direction (14) étant raccordé à un deuxième circuit électrique, les premier et deuxième circuits électriques étant séparés galvaniquement l'un de l'autre et le premier dispositif de commande (16) recevant des valeurs mesurées du capteur d'angle de manette de direction (14) par le biais d'un coupleur de signal (41).
